**Europäisches Patentamt**

**European Patent Office**

**Office européen des brevets**

(19)

(11) Veröffentlichungsnummer: **0 281 728**

**A2**

(12) # EUROPÄISCHE PATENTANMELDUNG

(21) Anmeldenummer: **88100489.9**

(22) Anmeldetag: **15.01.88**

(51) Int. Cl.⁴: **H04M 1/03 , H04M 1/66**

(30) Priorität: **07.03.87 DE 8703483 U**

(43) Veröffentlichungstag der Anmeldung:
**14.09.88 Patentblatt 88/37**

(84) Benannte Vertragsstaaten:
**AT BE CH DE ES FR GB GR IT LI LU NL SE**

(71) Anmelder: **ROBERT BOSCH GMBH**
**Postfach 50**
**D-7000 Stuttgart 1(DE)**

(72) Erfinder: **Siegle, Gert, Prof. Dr. Dipl.-Phys.**
**Kirchweg 7**
**D-1000 Berlin 38(DE)**

(74) Vertreter: **Schmidt, Hans-Ekhardt**
**Robert Bosch GmbH Geschäftsbereich**
**Elektronik Patent- und Lizenzabteilung**
**Forckenbeckstrasse 9-13**
**D-1000 Berlin 33(DE)**

(54) **Fernsprechvorrichtung.**

(57) Es wird eine Fernsprechvorrichtung mit einem Handapparat mit Bedienungs-und Anzeigeelementen sowie einer Mikroprozessorschaltung und mit einer Ablagevorrichtung für den Handapparat vorgeschlagen. Der Handapparat (10) enthält eine Aufnahmeöffnung (15) für eine Karte (16) und eine mit der Mikroprozessorschaltung (22) verbundene Schreib- und Lesevorrichtung (20). Die Schreib-und Lesevorrichtung dient zum Ein-und Auslesen von Informationen, die in der Karte (16) gespeichert sind. Durch den vorgenannten Aufbau kann die Bedienungsperson in einfacher Weise die Karte in die Aufnahmeöffnung des Handapparates einführen bzw. aus dieser herausnehmen. Außerdem kann die zugehörige Ablagevorrichtung ohne elektronische Teile hergestellt werden.

Fig. 1

## Fernsprechvorrichtung

### Stand der Technik

Die Erfindung geht von einer Fernsprechvorrichtung nach der Gattung des Hauptanspruchs aus.

Es sind Fernsprechvorrichtungen zum Beispiel in Form eines Funktelefons bekannt (DE-OS 33 13 146), die einen Handapparat mit Bedienungs-und Anzeigeelementen sowie eine Ablagevorrichtung mit einer Aufnahmeöffnung für eine Identitätskarte und eine mit einer Mikroprozessorschaltung verbundene Lesevorrichtung umfassen. Wird die Ablagevorrichtung im vorderen Teil eines Fahrzeuges fest installiert, so ist es für den Fahrer in der Regel schwierig, die Karte in die Aufnahmeöffnung zu stecken.

### Vorteile der Erfindung

Die erfindungsgemäße Fernsprechvorrichtung mit den kennzeichnenden Merkmalen des Hauptanspruchs hat den Vorteil einer erheblichen Bedienungsvereinfachung, weil die Bedienungsperson Handapparat und Karte bewegen kann. Ein weiterer Vorteil besteht darin, daß die Ablagevorrichtung als einfaches Bauteil ohne elektronische Teile hergestellt werden kann.

Durch die in den Unteransprüchen aufgeführten Maßnahmen sind vorteilhafte Weiterbildungen und Verbesserungen der im Hauptanspruch angegebenen Fernsprechvorrichtung möglich. Besonders vorteilhaft ist eine erfindungsgemäße Fernsprechvorrichtung, bei der die Aufnahmeöffnung in der Stirnseite am hörerseitigen Ende des Handapparates vorgesehen ist. Dadurch gestaltet sich das Einführen und Herausnehmen der Karte bei in der Hand gehaltenem Handapparat besonders einfach und sicher.

Die erfindungsgemäße Fernsprechvorrichtung ist nicht nur bei Funktelefonen, sondern auch bei - schnurlosen Telefonen oder bei Fernsprech-Nebenstellenapparaten mit Vorteil anwendbar.

### Zeichnung

Ein Ausführungsbeispiel der Erfindung ist in der Zeichnung an Hand zweier Figuren dargestellt und in der nachfolgenden Beschreibung näher erläutert. Die Zeichnung zeigt in

Fig. 1 eine perspektivische Ansicht des hörerseitigen Endes eines erfindungsgemäßen Handapparates und einer Chipkarte und

Fig. 2 eine Schnittansicht einer Aufnahmeöffnung des Handapparates und einer Chipkarte in stark vergrößertem Maßstab.

### Beschreibung der Erfindung

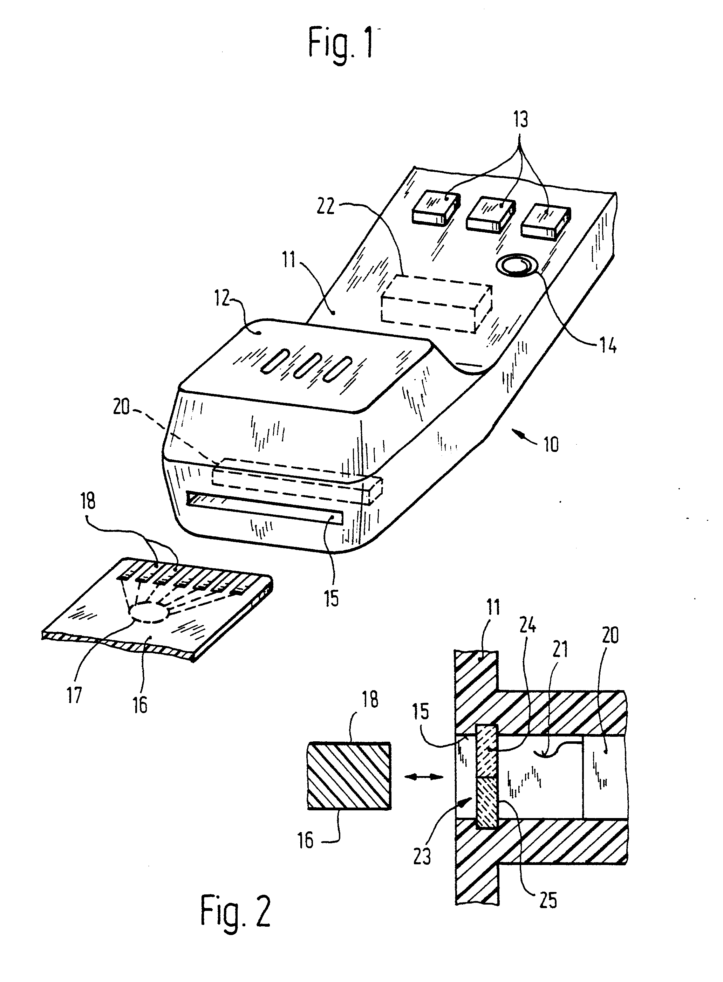

In Fig. 1 bezeichnet 10 einen Handapparat, dessen Gehäuse 11 unter anderem eine Hörmuschel 12, Bedienungselemente 13, Anzeigeelemente 14 und eine Aufnahmeöffnung 15 für eine Informationen tragende Karte 16 aufweist. Die Karte 16 hat vorzugsweise die Form einer Checkkarte. Die Aufnahmeöffnung 15 befindet sich vorzugsweise an der oberen Stirnseite des hörmuschelseitigen Endes des Gehäuses 11. Die Karte 16 enthält zur Speicherung der Informationen vorzugsweise einen Halbleiterspeicher 17, dessen Anschlüsse mit auf der Karte vorhandenen Kontaktbahnen 18 verbunden sind. Im Bereich der Aufnahmeöffnung 15 befindet sich im Innern des Gehäuses 11 eine Lese-und/oder Schreibvorrichtung 20 (vgl. auch Fig. 2) mit Gegenkontakten 21, die bei in die Aufnahmeöffnung 15 eingesteckter Karte 16 mit den Kontaktbahnen 18 Kontakt machen. Die Gegenkontakte 21 sind vorzugsweise Schleifkontakte.

Die Lese-und/oder Schreibvorrichtung 20 ist elektrisch mit einer Mikroprozessorschaltung 22 verbunden, die ebenfalls in dem Gehäuse 11 untergebracht ist.

Um zu verhindern, daß Feuchtigkeit oder Schmutz durch die Aufnahmeöffnung 15 in das Gehäuse 11 bzw. an die Gegenkontakte 21 gelangen, ist eine elastische Dichtung 23 vorgesehen. Diese besteht vorzugsweise aus an der Innenwand der Aufnahmeöffnung 15 befestigten Dichtlippen 24 und 25, die im Ruhezustand mit ihren Stirnseiten eng aufeinanderliegen und die Aufnahmeöffnung 15 nach außen wasserdicht abschließen. Beim Einführen der Karte 16 in die Aufnahmeöffnung 15 werden die Dichtlippen 24, 25 nach innen gebogen. Nach dem späteren Herausziehen der Karte nehmen die Dichtlippen wieder die in Fig. 2 gezeigte Lage ein. Als Material für die Dichtung 23 eignet sich vorzugsweise Moosgummi, der geschlossene Poren aufweist. An die Stelle der Dichtlippen 24 und 25 kann auch eine durch die Karte - schwenkbare bzw. bewegbare Dichtungsklappe treten.

## Ansprüche

1. Fernsprechvorrichtung mit einem Handapparat, der Bedienungs-und Anzeigeelemente sowie eine Mikroprozessorschaltung aufweist, und mit einer Ablagevorrichtung für den Handapparat, dadurch gekennzeichnet, daß der Handapparat (10) eine Aufnahmeöffnung (15) für eine Informationen tragende Karte (16) sowie eine mit der Mikroprozessorschaltung (22) verbundene Schreib- und/oder Lesevorrichtung (20) zum Ein-und/oder Auslesen von Informationen enthält.

2. Fernsprechvorrichtung nach Anspruch 1, dadurch gekennzeichnet, daß die Aufnahmeöffnung (15) in der Stirnseite am hörerseitigen Ende des Handapparates (10) vorgesehen ist.

3. Fernsprechvorrichtung nach Anspruch 1, dadurch gekennzeichnet, daß die Schreib-und/oder Lesevorrichtung (20) Kontakte (21) aufweist, die als Schleifkontakte ausgebildet sind.

4. Fernsprechvorrichtung nach Anspruch 1, dadurch gekennzeichnet, daß die Aufnahmeöffnung (15) nach außen durch eine elastische Dichtung (23) abgeschlossen ist.

5. Fernsprechvorrichtung nach Anspruch 4, dadurch gekennzeichnet, daß die elastische Dichtung (23) aus an der Innenwand der Aufnahmeöffnung (15) befestigten Dichtungslippen (24, 25) besteht, deren sich gegenüberstehende Stirnseiten zwischenraumlos aneinandergrenzen.

6. Fernsprechvorrichtung nach Anspruch 4 oder 5, dadurch gekennzeichnet, daß anstelle der Dichtungslippen (24, 25) eine durch die Karte (16) - schwenkbare bzw. bewegbare Dichtungsklappe vorhanden ist.

# Fig. 1

# Fig. 2